# EUROPÄISCHE PATENTSCHRIFT

(11) **EP 1 419 944 B1**
(45) Veröffentlichungstag und Bekanntmachung des Hinweises auf die Patenterteilung: **18.01.2006**
(21) Anmeldenummer: 03026207.5
(22) Anmeldetag: 14.11.2003
(51) Int. Cl.: B60R 25/04

(54) **Zündschlosssystem für ein Kraftfahrzeug**
Ignition lock system for a vehicle
Système de serrure et de démarrage de véhicule automobile

(30) Priorität: 16.11.2002 DE 10253520
(43) Veröffentlichungstag der Anmeldung: 19.05.2004
(73) Patentinhaber: Marquardt GmbH, 78604 Rietheim-Weilheim (DE); Volkswagen Aktiengesellschaft, 38436 Wolfsburg (DE)
(72) Erfinder: Schwarz, Thomas, 78573 Wurmlingen (DE); Müller, Karl, 78628 Rottweil-Neufra (DE); Sachs, Ekkehard, 78549 Spaichingen (DE); Frohne, Hans-Joachim, 38165 Lehre (DE); Borngräber, Ralf, 38440 Wolfsburg (DE)
(74) Vertreter: Eisele, Otten, Roth & Dobler

(56) Entgegenhaltungen:
- EP-A- 1 279 576
- DE-A- 19 939 733

## Beschreibung

Die Erfindung betriftt ein Zündschloßsystem nach dem Oberbegriff des Patentanspruchs 1.

In Kraftfahrzeugen befindet sich bei hohen Sicherheitsanforderungen ein elektronisches Zündschloß, das mittels eines elektronischen Schlüssels betätigbar ist. Das elektronische Zündschloß und der elektronische Schlüssel sind Bestandteile des dem Schutz gegen unbefugte Benutzung dienenden Zündschloßsystems.

Aus der DE 44 34 587 A1 ist ein solches Zündschloßsystem mit einem elektronischen Zündschloß und einem elektronischen Schlüssel bekannt. Das Zündschloß weist eine Aufnahme für den Schlüssel auf, die sich in einem als Rotor ausgestalteten Trageretement befindet. Der Rotor ist mittels des Schlüssels zwischen einer Ausgangs- und mehreren Bewegungsstellungen manuell durch Drehung bewegbar. Nach positiver Auswertung eines zwischen dem Schlüssel und dem Zündschloß ausgetauschten elektronischen Codes ist wenigstens eine vom Zündschloß bewirkbare Funktion, wie das Einschalten von Verbrauchern im Kraftfahrzeug, beispielsweise von Radio, Beleuchtung usw., wie das Starten des Kraftfahrzeugs o. dgl., freigegeben. Zur Auslösung der Funktion wirkt der Rotor in der jeweiligen Bewegungsstellung dementsprechend auf ein Schaltelement ein.

Zur Bedienung wird bei dem bekannten Zündschloß der Schlüssel in die jeweilige Bewegungsstellung gedreht. Es ist auch denkbar, was jedoch in der genannten Offenlegungsschrift nicht weiter erwähnt ist, das Zündschloß durch eine einfache geradlinige Bewegung dcs Schlüssels zu bedienen, beispielsweise durch eine manuelle Steck- und DrucKbewegung des Schlüssels durch den Benutzer. Für einen solchen Fall gibt die Offenlegungsschrift allerdings keinen Hinweis zur näheren Ausgestaltung der Bewegungsstellungen.

Ein solches, durch geradlinige Bewegung des Schlüssels bedienbares Zündschloß ist aus der DE 199 39 733 A1 bekannt. Dieses Zündschloß besitzt ein in der Art eines Schiebers ausgestaltetes Trägerelement. In eine Aufnahme am Trägerelement ist der Schlüssel einsteckbar, so daß das Trägerelement mittels des Schlüssels zwischen einer Ausgangsstellung und Bewegungsstellungen linear bewegbar ist.

Der Erfindung liegt die Aufgabe zugrunde, das mittels einer geradlinigen Bewegung des Schlüssels, insbesondere vom Benutzer manuell; betätigbare Zündschloß so auszugestalten, daß dieses in einfacher Art und Weise bedienbar ist.

Diese Aufgabe wird bei einem gattungsgemaßen Zündschloßsystem durch die kennzeichnenden Merkmale des Anspruchs 1 gelost.

Bei dem erfindungsgemäßen Zündschloß sind die eine sowie eine weitere Bewegungsstellung für das Trägerelement jeweils als Raststellungen ausgebildet. Die beiden Raststellungen sind durch das Zusammenwirken einer Rastkurve, die in der Art eines Schaltherzens ausgestaltet sein kann, mit einem in die Rastkurve eingreifenden Raststift, der insbesondere mit einer elastischen Kraft beaufschlagt ist, festgelegt. Bevorzugterweise sind dabei zwei Rastkurven in Bewegungsrichtung des Trägerelements hintereinander angeordnet. Bei Bewegung des Trägerelements wirkt eine Rückstellkraft, die beispielsweise mittels einer Druckfeder erzeugbar ist, in Richtung auf die Ausgangsstellung auf das Trägerelement ein. Somit erfolgt eine vom Benutzer ausgelöste, ansonsten jedoch selbsttätige Rückführung des Schlüssels aus der einen oder der weiteren Bewegungsstellung in die Ausgangsstellung.

Aus der nicht vorveröffentlichten EP 1 279 576 A2 ist ebenfalls ein elektronisches Zündschloß mit einem in der Art eines Schiebers ausgebildeten Trägerelement bekannt. Der elektronische Schlüssel ist in eine Aufnahme am Trägerelement einführbar, so daß das Trägerelement mittels des Schlüssels zwischen einer Ausgangsstellung und Bewegungsstellungen linear bewegbar ist. Bei der einen Bewegungsstellung für das Trägerelement handelt es sich um eine Raststellung, die durch das Zusammenwirken einer, insbesondere in der Art eines Schaltherzens ausgestalteten Rastkurve mit einem in die Rastkurve eingreifenden, insbesondere mit einer elastischen Kraft beaufschlagten Raststift festgelegt ist. In dieser Raststellung wirkt eine Rückstellkraft, die insbesondere mittels einer Druckfeder erzeugt ist, in Richtung auf die Ausgangsstellung auf das Trägerelement ein. Bei der anderen Bewegungsstellung des Zündschlosses wirkt hingegen keine Rückstellkraft auf das Trägerelement ein. Das erfindungsgemäße Zündschloß besitzt zwei als Raststellungen ausgebildete Bewegungsstellungen für das Trägerelement, die wiederum durch das Zusammen wirken der Rastkurve mit dem in die Rastkurve eingreifenden Raststift festgelegt sind. Im Unterschied zur EP 1279 576 A2 wirkt jedoch die Rückstellkraft in Richtung auf die Ausgangsstellung auf das Trägerelement auch bei dessen Bewegung in der anderen Bewegungsstellung ein.

Das Einstecken des Schlüssels sowie die weitere Bedienung des Schlüssels im Zündschloß durch den Benutzer erfolgt beim erfindungsgemäßen Zündschloß auf einfache Weise. Die Bedienung wird vom Benutzer als besonders ergonomisch empfunden, obwohl auf die Anordnung von zusätzlichen Dämpfungsgliedern im Zündschloß für die Bewegung des Schlüssels verzichtet werden kann. Außerdem arbeitet das Zündschloß trotz der rauhen Bedingungen im Kraftfahrzeug aufgrund der unempfindlichen Schaltherzen sehr zuverlässig und fchlerunanfällig. Weitere Ausgestaltungen der Erfindung sind Gegenstand der Unteransprüche.

Das Trägerelement kann durch manuelle Bedienung des Benutzers bis in noch eine weitere Bewegungsstellung bewegbar sein, in der das Kraftfahrzeug dann gestartet wird. Anschließend wird nach Beendigung der manuellen Einwirkung das Trägerelement aus der noch weiteren Bewegungsstellung in die der weiteren Bewegungsstellung zugeordnete Raststellung selbsttätig zurückgeführt. Der Bedienungsablauf eines solcherart ausgestalteten Zündschlosses entspricht bis auf die Linearbewegung demjenigen eines herkömmlichen Zündschlosses, so daß das Zündschloß weitgehend intuitiv vom Benutzer zu bedienen ist.

Zwischen den beiden Rastkurven kann eine Kontur derart angeordnet sein, daß der Raststift ausgehend von der Ausgangsstellung entlang der Kontur immer zunächst in die der einen Bewegungsstellung entsprechende Raststellung gelenkt wird. Dies entspricht wiederum dem herkömmlichen Bedienungsablauf Alternativ kann jedoch auch ein Teil der Kontur, der in der Bahn außerhalb der Raststellungen liegt, weggelassen werden. Damit wird kurz vor der einen Bewegungsstellung ein Druckpunkt erzeugt, bei dessen Überwindung und weiterer Bewegung die noch weitere Bewegungsstellung ohne vorheriges Einrasten in der einen Bewegungsstellung erreichbar ist. Wird die Bewegung beim Druckpunkt nicht fortgesetzt, so gelangt das Trägerelement zunächst wieder in die eine Bewegungsstellung. Bei einer Ausgestaltung gemäß der Alternative ist somit ein rasches, unverzögertes Starten des Kraftfahrzeugs ermöglicht.

Das Zündschloß weist ein Gehäuse mit einer Öffnung für das Einstecken des Schlüssels auf. Zur Erzielung einer guten Abdichtung gegen Staub, Schmutz o. dgl. kann die Öffnung durch das Trägerelement in dessen Ausgangsstellung verschlossen sein. Hierzu korrespondiert die Aufnahme im Trägerelement mit der Öffnung derart, daß eine Art von Hohlraum im Trägerelement gebildet ist, wobei der Hohlraum ins Innere des Gehäuses weitgehend abgeschlossen ist. Falls erforderlich kann auch eine vom Schlüssel bewegliche, federbelastete Klappe die Aufnahme verschließen, wenn der Schlüssel nicht eingesteckt ist. Im Gehäuse kann sich schließlich noch eine Führung für die Bewegung des Trägerelements befinden, so daß ein präziser Bewegungsablauf für den Schlüssel gegeben ist.

In einer Weiterbildung ist an Trägerelement ein verschwenkbarer Rasthebel angeordnet, der mit einer Druckfeder belastet ist. Der Rasthebel greift mittels eines Nockens bei in der Aufnahme befindlichem Schlüssel in eine Ausnehmung am Schlüssel ein und ist weiterhin mittels einer Sperrkontur im Gehäuse bei nicht in der Ausgangsstellung befindlichem Trägerelement in der Ausnehmung festgehalten. Der Rasthebel ist jedoch in der Ausgangsstellung des Trägerelements gegen die Kraft der Druckfeder in eine Unterbrechung an der Sperrkontur derart verschwenkbar, daß der Schlüssel in die Aufnahme einführbar sowie entnehmbar ist. Der verschweckbare Rasthebel dient somit zum Schutz des Benutzers als Abzugssicherung für den Schlüssel aus der Aufnahme, wenn das Trägerelement nicht in der Ausgangsstellung und damit das Kraftfahrzeug im Betrieb befindlich ist. Um ein unabsichtliches Verhaken o. dgl. des Trägerelements bei dessen Bewegung auszuschließen, kann das Trägerelement zwei beidseitig angeordnete Rasthebel besitzen.

Zur Bewirkung und/oder Freigabe der jeweiligen Funktionen des Zündschlosses können in den Bewegungsstellungen elektrische, elektronische, optische, sensorische o. dgl. Schaltelemente vom Trägerelement betätigt werden, so daß das Schaltsignal des jeweiligen Schaltelements die zugehörige Funktion kennzeichnet. Bevorzugterweise handelt es sich bei dem Schaltelement um einen Hallsensor, wobei am Trägerelement ein zum Hallsensor korrespondierender Magnet angeordnet ist.

Zur Aufnahme der elektrischen und/oder elektronischen Bauteile, wie des Schaltelements, des Hallsensors o. dgl., bietet sich eine Leiterplatte im Gehäuse des Zündschlosses an. Für ein kompaktes Zündschloß läßt sich die Leiterplatte in platzsparender Weise in etwa parallel zur Führung für das Trägerelement anordnen. Zur einfachen Montage im Zündschloß kann die Leiterplatte im Gehäuse eingelegt, eingerastet, eingeclipst o. dgl. sein.

Schließlich können aufgrund von Toleranzen nach Einbau des Zündschlosses im Kraftfahrzeug auftretende Spalte dadurch verdeckt werden, daß die Aufnahme durch eine Blende umrahmt ist. Es bietet sich dabei an, die Blende auf das Gehäuse des Zündschlosses auszurasten.

Die mit der Erfindung erzielten Vorteile bestehen insbesondere darin, daß das Zündschloßsystem einen einfachen, bedienerfreundlichen linearen Bewegungsablauf aufweist. Dabei ist das Zündschloß einfach und kostengünstig ausgestaltet. Außerdern ist das Zündschloß trotz hoher Funktionalität sehr robust und fehlerunanfällig. Weiterhin kann, falls gewünscht, auf die herkömmliche und fehleranfällige klappbare Abdeckung an der Aufnahme des Zündschlosses bei entnommenen Schlüssel verzichtet werden. Das Zündschloßsystem läßt sich trotz hoher Funktionalität und Sicherheit sehr kompakt ausgestalten und ist daher auch in beengten Einbauräumen im Kraftfahrzeug gut unterzubringen.

Weiterhin ist vorteilhaft, daß der Schlüssel während des Fahrbetriebs des Kraftfahrzeugs im wesentlichen vollständig im Zündschloß aufgenommen ist. Dadurch ist eine Verletzungsgefahr durch den Schlüssel für das Knie des Benutzers bei einem Unfall weitgehend verhindert.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: ein Zündschloßsystem für ein Kraftfahrzeug bestehend aus einem Zündschloß mit einem eingesteckten Schlüssel in perspektivischer Ansicht, wobei der Schlüssel in Ausgangsstellung befindlich ist,
- Fig. 2: das Zündschloßsystem wie in Fig. 1, wobei der Schlüssel in einer Bewegungsstellung befindlich ist,
- Fig. 3: das Zündschloßsystem wie in Fig. 1, wobei der Schlüssel in einer anderen Bewegungsstellung befindlich ist,
- Fig. 4: das Zündschloß aus Fig. 1 ohne Schlüssel,
- Fig. 5: das Zündschloßsystem wie in Fig. 1, wobei jedoch das Gehäuse des Zündschlosses geöffnet ist, und wobei teilweise verdeckt liegende Teile sichtbar sind,
- Fig. 6: einen vergrößerten Ausschnitt aus Fig. 5 im Bereich der Rastkurven,
- Fig. 7: eine vergrößerte Detailansicht aus Fig. 5 im Bereich des Rasthebels,
- Fig. 8: den Boden des geöffneten Gehäuses für das Zündschloß und
- Fig. 9: ein Kraft-Weg-Diagramm für die Bewegung des Schlüssels im Zündschloß.

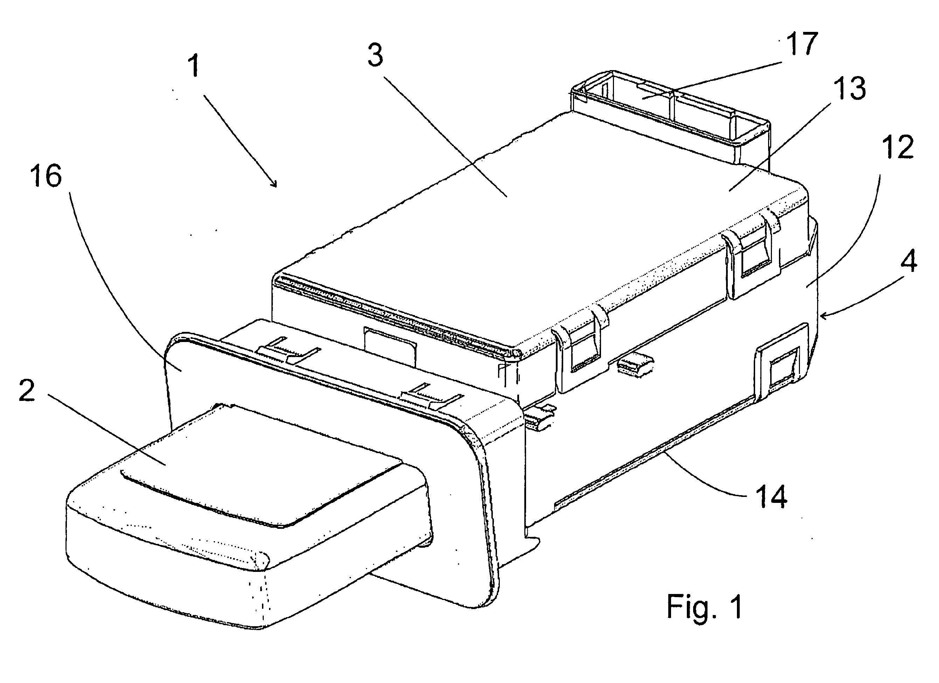

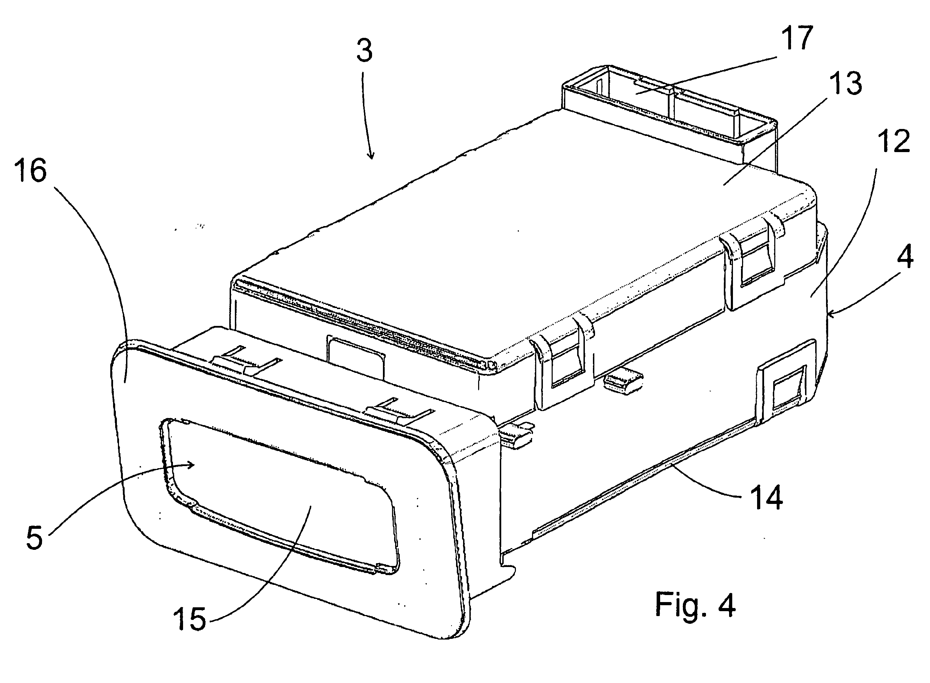

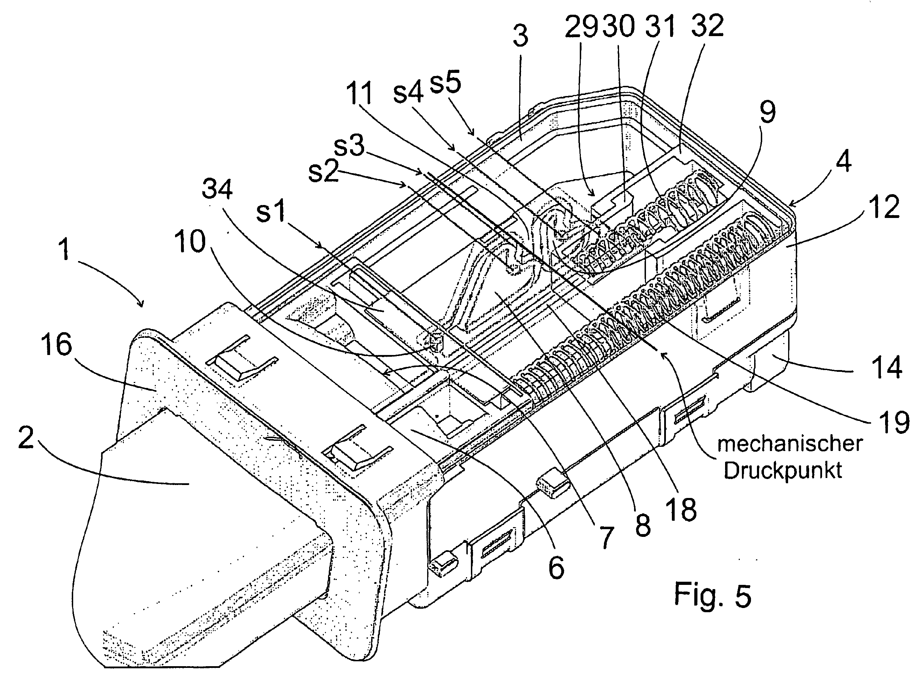

In Fig. 1 ist ein Zündschloßsystem 1 für ein Kraftfahrzeug zu sehen, das aus einem elektronischen Zündschloß 3 und einem elektronischen Schlüssel 2 besteht. Das beispielsweise in der Instrumententafel des Kraftfahrzeugs eingebaute Zündschloß 3 besitzt ein Gehäuse 4. In das Zündschloß 3 ist an einer in Fig. 4 sichtbaren Öffnung 5 im Gehäuse 4 der Schlüssel 2 einsteckbar. Wie weiter in Fig. 5 zu sehen ist, weist das Zündschloß 3 eine in einem Trägerelement 6 befindliche Aufnahme 7 für den Schlüssel 2 auf. Das Trägerelement 6 ist mittels des Schlüssels 2 zwischen einer Ausgangsstellung s1 und hintereinander liegenden Bewegungsstellungen s2 bis s5, die in Fig. 5 mit entsprechenden Pfeilen bezeichnet sind, manuell bewegbar. Hierzu ist das Trägerelement 6 in der Art eines Schiebers linear beweglich ausgestaltet.

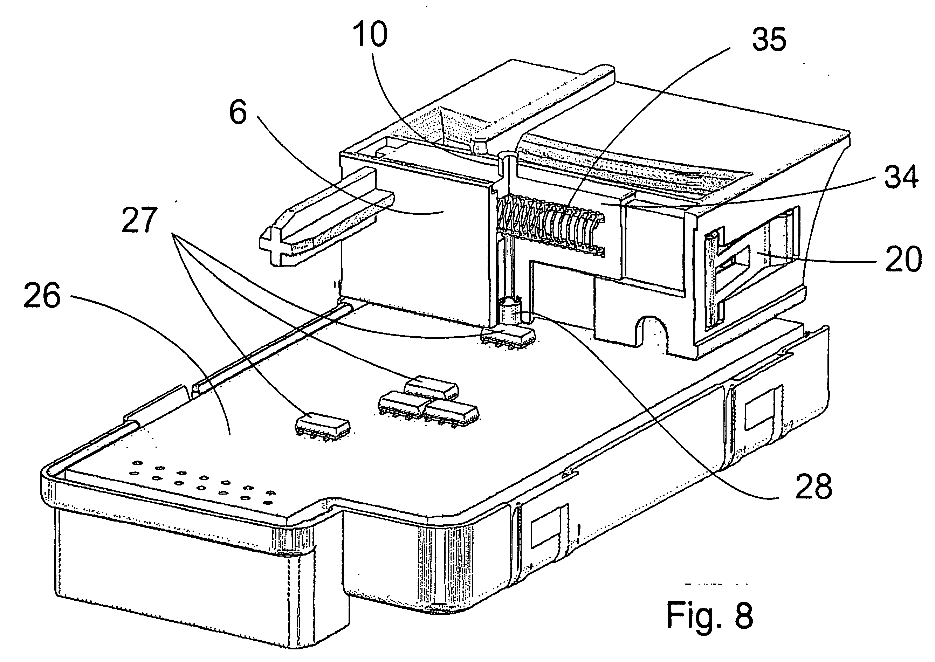

In Fig. 5 ist das Trägerelements 6 in seiner Ausgangsstellung s1 gezeigt, in der der Schlüssel 2 in die Aufnahme 7 einsteckbar sowie aus der Aufnahme 7 entnehmbar ist. Die Bewegungsstellung s2 sowie die Bewegungsstellung s4 für das Trägerelement 6 sind jeweils als Raststellungen ausgebildet. Die beiden Raststellungen werden durch das Zusammenwirken einer in der Art eines Schaltherzens ausgestalteten Rastkurve 8, 9 mit einem Raststift 10 festgelegt. Hierzu greift der Raststift 10 in die Rastkurve 8, 9 ein. Der Raststift 10 ist an einem Schiebeelement 34 angeordnet, das seinerseits zur Bewegungsrichtung des Trägerelements 6 querbeweglich am Trägerelement 6 gelagert ist, wie anhand von Fig. 8 zu erkennen ist. Weiter ist der Raststift 10 über das Schiebeelement 34 mit einer von einer Feder 35 erzeugten elastischen Kraft beaufschlagt. Wie in Fig. 5 zu sehen ist, sind die beiden Rastkurven 8, 9 in Bewegungsrichtung des Trägerelements 6 hintereinander im Zündschloß 3 angeordnet, so daß die Ausgangsstellung s1 und die Bewegungsstellungen s2 bis s5 aufeinander folgen. Selbstverständlich können die beiden Rastkurven 8, 9 auch zueinander versetzt oder in sonstiger geeigneter Weise angeordnet sein.

Ist der Schlüssel 2 in die Aufnahme 7 eingeführt und wird dieser anschließend mitsamt dem Trägerelement 6 aufgrund manueller Einwirkung des Benutzers auf den Schlüssel 2 von der Ausgangsstellung s1 in eine der Bewegungsstellungen s2 bis s5 gebracht, so wird dabei zwischen dem Schlüssel 2 und dem Zündschloß 3 ein elektronischer Code, und zwar bevorzugt in einer bidirektionalen Kommunikation, ausgetauscht oder übertragen. Nach positiver Auswertung des zwischen dem Schlüssel 2 und dem Zündschloß 3 ausgetauschten elektronischen Codes, d.h. es handelt sich um den berechtigten Schlüssel 2, wird wenigstens eine vom Zündschloß 3 bewirkbare Funktion freigegeben und/oder ausgelöst. Bei dieser freigegebenen und/oder ausgelösten Funktion kann es sich um das Einschalten von Verbrauchern im Kraftfahrzeug, wie um das Radio, die Beleuchtung usw., um das Starten des Kraftfahrzeugs o. dgl. handeln. Der elektronische Code zur Freigabe und/oder Auslösung dieser Funktionen kann bei der Bewegung des Trägerelements 6 zwischen der Ausgangsstellung s1 und einer Bewegungsstellung s2 bis s5, in wenigstens einer der Bewegungsstellungen oder auch falls notwendig in anderen Stellungen, beispielsweise bereits in der Ausgangsstellung s1, zwischen dem Schlüssel 2 und dem Zündschloß 3 ausgetauscht werden. Die Auswertung des elektronischen Codes kann dabei im Zündschloß 3 selbst erfolgen oder falls gewünscht auch in einem separaten Steuergerät. Desweiteren ist der elektronische Code auch von einem sonstigen Identifikationsgeber, wie einer beim Benutzer befindlichen, separaten Chipkarte übertragbar, womit der Schlüssel 2 dann lediglich als Bedienelement im Zündschloß 3 für den Benutzer dient.

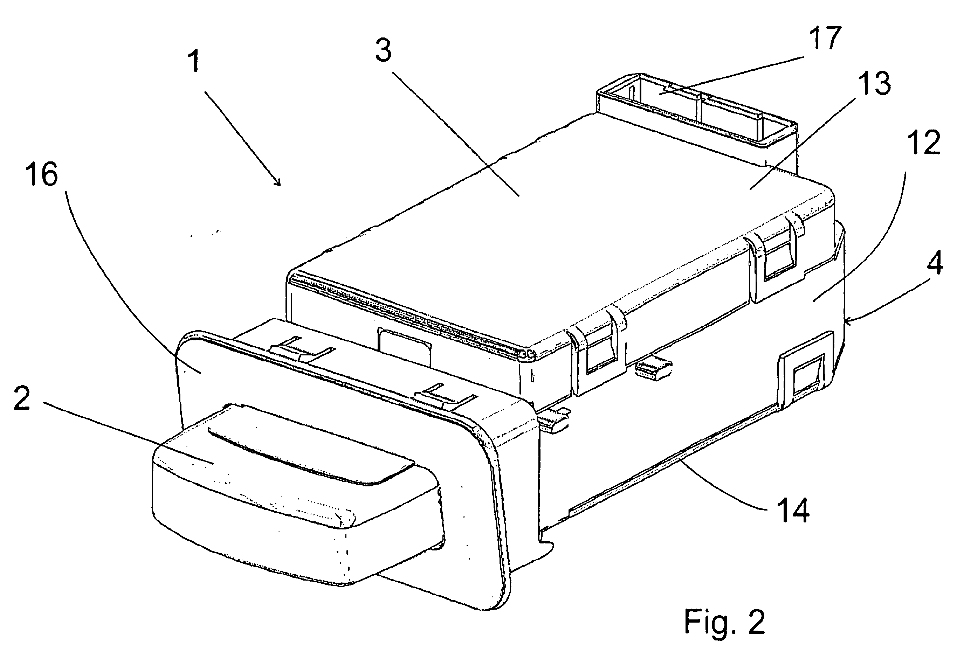

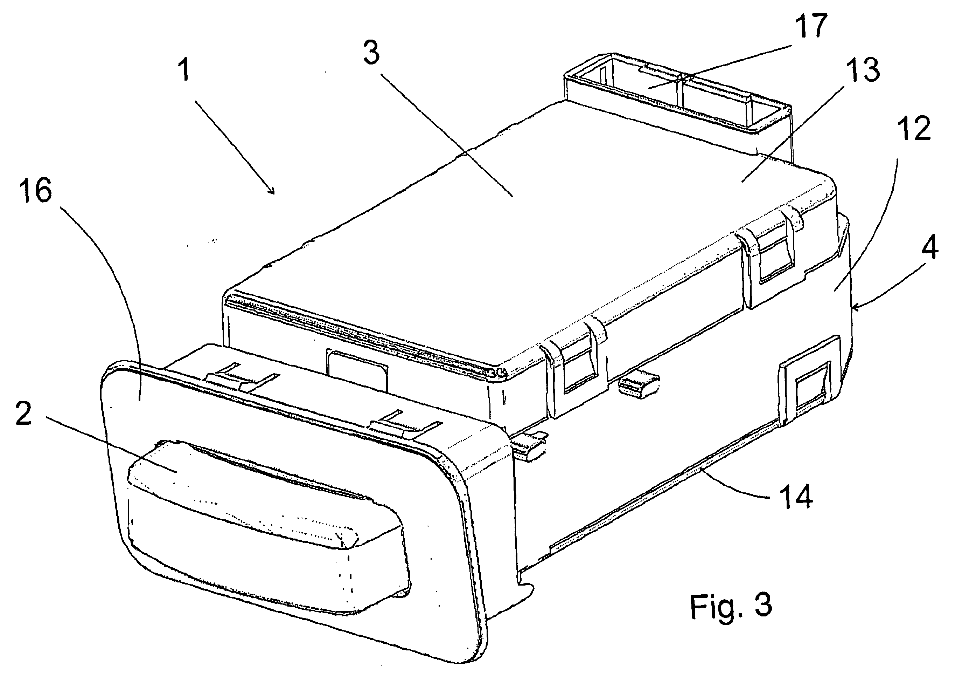

Der nähere Ablauf der Funktionsweise des Zündschloßsystems 1 ist nun anhand der Fig. 5 wie folgt. In der Ausgangsstellung s1 des Trägerelements 6 wird der Schlüssel 2 in die Aufnahme 7 gesteckt und rastet in der Aufnahme 7 ein, was auch in Fig. 1 gezeigt ist. Bei Bewegung des Schlüssels 2, indem der Benutzer auf den Schlüssel 2 drückend einwirkt, bis in die Bewegungsstellung s3 wird die sogenannte "Klemme 15" aktiviert, in der das Zuschalten von Verbrauchern im Kraftfahrzeug ermöglicht ist. Das Trägerelement 6 mitsamt dem Schlüssel 2 bewegt sich dann in die rastende Bewegungsstellung s2 und verbleibt dort. Der Schlüssel 2 in der Bewegungsstellung s2, in der die Zündung des Kraftfahrzeugs eingeschaltet ist, ist auch in Fig. 2 zu sehen. Bei nochmaligem Drücken des Schlüssels 2 durch den Benutzer wird das Trägerelement 6, nachdem eine erhöhte Kraft in der Nähe der Bewegungsstellung s3 überwunden ist, bis in die Bewegungsstellung s5 bewegt, wo der Motor des Kraftfahrzeugs gestartet wird. Das Trägerelement 6 mitsamt dem Schlüssel 2 bleibt danach in der Bewegungsstellung s4 stehen. Die Bewegungsstellung s4, in der sich das Kraftfahrzeug dann im Fahrbetrieb befindet, ist auch in Fig. 3 gezeigt. Bei erneuter Betätigung des Schlüssels 2 durch den Benutzer wird der Motor des Kraftfahrzeugs gestoppt und das Trägerelement 6 mitsamt dem Schlüssel 2 bewegt sich bis in die Ausgangsstellung s1 zurück. Dort kann der Schlüssel 2 dann wiederum aus der Aufnahme 7 abgezogen werden. Schließlich kann, nachdem der Schlüssel 2 durch den Benutzer aus der Bewegungsstellung s2 nur bis zum mechanischen Druckpunkt betätigt und dann losgelassen wird, das Trägerelement 6 mitsamt dem Schlüssel 2 ebenfalls in die Ausgangsstellung s1 zurückgeführt werden, wobei dann kein Motorstart erfolgt.

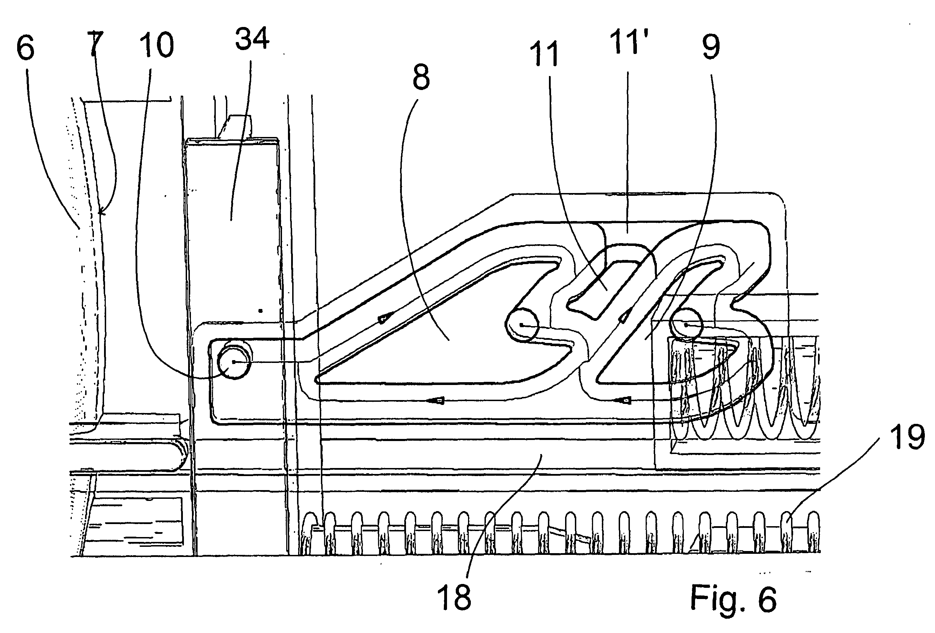

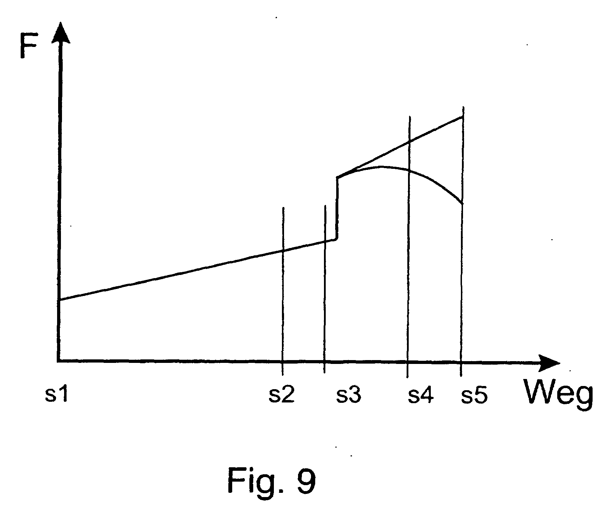

Die Bewegungsbahn für den Raststift 10 in den Rastkurven 8, 9 bei diesem Ablauf ist in Fig. 6 eingezeichnet. Die bei diesem Ablauf zur Bewegung des Schlüssels 2 durch den Benutzer notwendige Kraft ist schließlich noch in Fig. 9 dargestellt. Dort ist auch deutlich der Druckpunkt bei der Bewegungsstellung s3 zu sehen. Zum Starten des Kraftfahrzeugs in der Bewegungsstellung s5 dient ein in Fig. 5 näher gezeigtes Betätigungselement 29. Das Betätigungselement 29 besteht aus einer im Gehäuse 4 befestigten Halterung 32, in der ein Druckelement 30 gegen die Kraft einer Feder 31 zum Schalten eines nicht weiter sichtbaren Schaltelements bewegbar ist, wobei das Schaltsignal dieses Schaltelements dann den Startvorgang bewirkt, falls der Code zulässig ist. Das Druckelement 30 wird seinerseits vom Trägerelement 6 in der Bewegungsstellung s5 bewegt.

Wie bereits erwähnt, ist das Trägerelement 6 durch manuelle Bewegung mittels des Schlüssels 2 bis in die Bewegungsstellung s5 bewegbar, in der das Kraftfahrzeug gestartet wird. Aus der Bewegungsstellung s5 wird das Trägerelement 6 anschließend, und zwar nach Beendigung der manuellen Einwirkung des Benutzers auf den Schlüssel 2, in die der Bewegungsstellung s4 zugeordnete Raststellung selbsttätig zurückgeführt. Zwischen den beiden Rastkurven 8, 9 ist eine in Fig. 6 sichtbare Kontur 11 derart angeordnet, daß der Raststift 10 ausgehend von der Ausgangsstellung s1 entlang der Kontur zunächst in die der ersten Raststellung entsprechende Bewegungsstellung s2 gelenkt wird. Ausgehend von der Ausgangsstellung s1 ist der Motorstart aufgrund der Kontur 11 nur bei zweimaliger Betätigung des Schlüssels 2 durch den Benutzer möglich. Alternativ ist auch eine Ausgestaltung denkbar, welche ein Starten des Motors bereits durch einmaliges Drücken des Schlüssels 2 und Überwindung des Druckpunktes zuläßt. In diesem Fall wird der Teil 11' der Kontur 11 weggelassen, was in Fig. 6 ebenfalls dargestellt ist. Dadurch ist es möglich, ohne in die Bewegungsstellung s2 zu gelangen, das Trägerelement 6 direkt in die Bewegungsstellung s5 zum Starten des Kraftfahrzeugs weiter zu bewegen.

In weiterer Ausgestaltung besitzt das Zündschloß 3, wie bereits erwähnt und in Fig. 4 gezeigt, ein Gehäuse 4, das im Einzelnen aus einem Grundrahmen 12, einem Deckel 13 und einem Boden 14 besteht. Das Gehäuse 4 weist an seinem Grundrahmen 12 die Öffnung 5 auf. Die Öffnung 5 ist durch das Trägerelement 6 selbst in dessen Ausgangsstellung verschlossen, indem die hohlraumartige Aufnahme 7 im Trägerelement 6 mit der Öffnung 5 korrespondiert. Dadurch ist das Innere des Zündschlosses 3 durch die Wände der Aufnahme 7 im Trägerelement 6 weitgehend abgeschlossen. Zusätzlich kann die Aufnahme 7 noch mittels einer beweglichen und federbelasteten Klappe 15 verschlossen sein, die in Fig. 4 zu sehen ist. Die Klappe 15 wird beim Einstecken des Schlüssels 2 in die Öffnung 5 nach einer Seite wegbewegt und gibt dann die Aufnahme 7 zum vollständigen Einführen des Schlüssels 2 frei. Die Aufnahme 7 für den Schlüssel 2 beziehungsweise die Öffnung 5 ist von einer Blende 16 umrahmt, die auf das Gehäuse 4 aufgerastet wird, um so entsprechende Ausschnitte in der Instrumententafel des Kraftfahrzeugs nach Montage des Zündschlosses 3 zu verdecken. Der elektrische Anschluß des Zündschlosses 3 im Kraftfahrzeug erfolgt über eine Steckerbuchse 17 am Gehäuse 4. Im Gehäuse 4 befindet sich eine in Fig. 5 sichtbare Führung 18 für die lineare Bewegung des als Schieber ausgestalteten Trägerelements 6. Eine Druckfeder 19 dient schließlich zur Erzeugung einer in Richtung auf die Ausgangsstellung s1 wirkenden Rückstellkraft für das Trägerelement 6 bei dessen Bewegung.

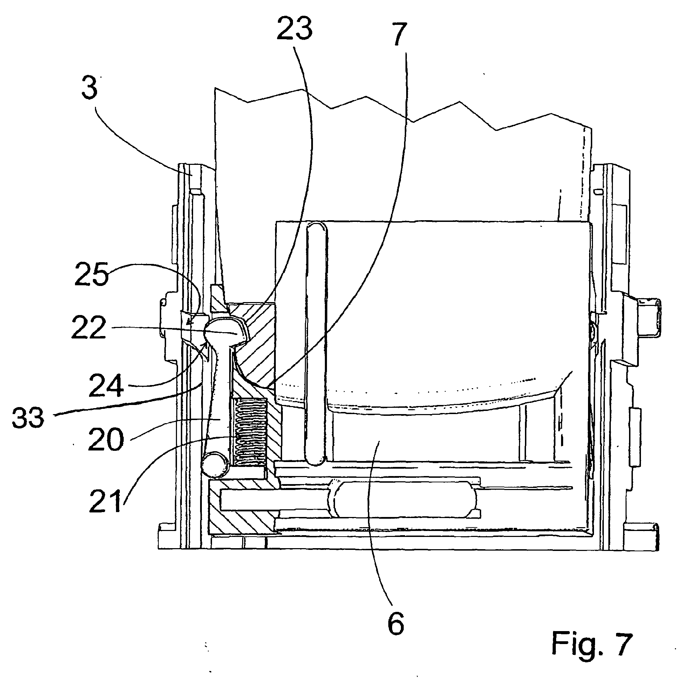

Aus Sicherheitsgründen ist der Schlüssel 2 lediglich in der Ausgangsstellung s1 aus der Aufnahme 7 entnehmbar, indem dieser außerhalb der Ausgangsstellung s1 des Trägerelements 6 in der Aufnahme 7 verrastet ist. Die nähere Ausgestaltung der Verrastung des Schlüssels 2 ist in Fig. 7 dargestellt.

Am Trägerelement 6 ist zur Verrastung ein Rasthebel 20 verschwenkbar angeordnet. Der Rasthebel 20 ist derart mit einer Druckfeder 21 belastet, daß der Rasthebel 20 in Richtung zur Aufnahme 7 verschwenkt wird. Befindet sich der Schlüssel 2 in der Aufnahme 7, so greift der Rasthebel 20 mittels eines Nockens 22 in eine Ausnehmung 23 am Schlüssel 2 ein, wie anhand von Fig. 7 zu sehen ist. Befindet sich das Trägerelement 6 in der Ausgangsstellung s1, so ist der Rasthebel 20 jedoch gegen die Kraft der Druckfeder 21 in eine Unterbrechung 25 an einer Sperrkontur 33, die sich an der Seitenwand im Gehäuse 4 befindet, derart durch den Schlüssel 2 verschwenkbar, daß der Schlüssel 2 in die Aufnahme 7 einführbar sowie aus dieser entnehmbar ist. Befindet sich jedoch das Trägerelement 6 nicht in der Ausgangsstellung s1, indem dieses mittels des Schlüssels 2 durch manuelle Einwirkung in Richtung der Bewegungsstellungen s2 bis s5 bewegt wird, so liegt der Rasthebel 20 mit einer Fläche 24 am Nocken 22 an der Sperrkontur 33 im Gehäuse 4 an, so daß der Nocken 22 die Ausnehmung 23 am Schlüssel 2 nicht verlassen kann. Der Schlüssel 2 ist dann in der Art einer Abzugssicherung in der Aufnahme 7 festgehalten. Es kann sich anbieten zwei solche Rasthebel 20 beidseitig am Trägerelement 6 anzuordnen, was jedoch in Fig. 7 nicht weiter gezeigt ist.

In einigen Bewegungsstellungen, und zwar in der Bewegungsstellung s3 und s5 wird eine Funktion des Kraftfahrzeugs freigegeben und/oder ausgelöst, wozu das Trägerelement 6 ein diesen Bewegungsstellungen zugeordnetes elektrisches, elektronisches, optisches, sensorisches o. dgl. Schaltelement betätigt, so daß das Schaltsignal des Schaltelements die jeweilige Funktion kennzeichnet. Bevorzugterweise ist das Schaltelement als Hallsensor 27 ausgebildet und am Trägerelement 6 befindet sich zum Schalten des Hallsensors 27 ein zum Hallsensor 27 korrespondierender Magnet 28, wie in Fig. 8 gezeigt ist. An der Unterseite im Gehäuse 4, und zwar im Boden 14, befindet sich eine insbesondere in Fig. 8 sichtbare, in etwa parallel zur Führung 18 für das Trägerelement 6 angeordnete Leiterplatte 26, die die elektrischen und/oder elektronischen Bauteile aufnimmt. Bei diesen Bauteilen handelt es sich um diejenigen, die zum Betrieb des Zündschlosses 3 notwendig sind. Desweiteren befinden sich die Hallsensoren 27, die Schaltelemente o. dgl. auf der Leiterplatte 26. Die Leiterplatte 26 kann im Gehäuse 4 eingelegt, eingerastet, eingeclipst o. dgl. sein.

Die Erfindung ist nicht auf das beschriebene und dargestellte Ausführungsbeispiel beschränkt. Sie umfaßt vielmehr auch alle fachmännischen Weiterbildungen im Rahmen der durch die Patentansprüche definierten Erfindung. So kann die Erfindung nicht nur an Zündschloßsystemen für beliebige Fahrzeuge Verwendung finden, sondern auch an sonstigen Schlössern, beispielsweise solchen, die an Arbeitsmaschinen, Immobilien o. dgl. angeordnet sind, eingesetzt werden.

### Bezugszeichen-Liste:

- 1:: Zündschloßsystem
- 2:: Schlüssel
- 3:: Zündschloß
- 4:: Gehäuse
- 5:: Öffnung (im Gehäuse)
- 6:: Trägerelement
- 7:: Aufnahme
- 8,9:: Rastkurve
- 10:: Raststift
- 11:: Kontur
- 11':: Teil (der Kontur)
- 12:: Grundrahmen (von Gehäuse)
- 13:: Deckel (von Gehäuse)
- 14:: Boden (von Gehäuse)
- 15:: Klappe
- 16:: Blende
- 17:: Steckerbuchse
- 18:: Führung
- 19:: Druckfeder (am Trägerelement)
- 20:: Rasthebel
- 21:: Druckfeder (am Rasthebel)
- 22:: Nocken (am Rasthebel)
- 23:: Ausnehmung (am Schlüssel)
- 24:: Fläche (an Nocken)
- 25:: Unterbrechung (in Sperrkontur)
- 26:: Leiterplatte
- 27:: Hallsensor
- 28:: Magnet
- 29:: Betätigungselement (für Startvorgang des Kraftfahrzeugs)
- 30:: Druckelement (von Betätigungselement)
- 31:: Feder (für Druckelement)
- 32:: Halterung (für Druckelement)
- 33:: Sperrkontur
- 34:: Schiebeelement (für Raststift)
- 35:: Feder (für Raststift)

## Patentansprüche

1. Zündschloßsystem, insbesondere in einem Kraftfahrzeug, mit einem elektronischen Zündschloß (3) sowie mit einem elektronischen Schlüssel (2), wobei das Zündschloß (3) eine in einem Trägerelement (6) befindliche Aufnahme (7) für den Schlüssel (2) aufweist, wobei das Trägerelement (6) in der Art eines Schiebers mittels des Schlüssels (2) zwischen einer Ausgangsstellung (s1) und Bewegungsstellungen (s2, s3, s4, s5) linear bewegbar ist, wobei insbesondere zwischen dem Schlüssel (2) und dem Zündschloß (3) ein elektronischer Code austauschbar ist, und wobei nach positiver Auswertung des Codes wenigstens eine vom Zündschloß (3) bewirkbare Funktion, wie das Einschalten von Verbrauchern im Kraftfahrzeug, das Starten des Kraftfahrzeugs o. dgl., freigegeben ist und/oder ausgelöst wird, **dadurch gekennzeichnet, daß** eine Bewegungsstellung (s2) sowie eine weitere Bewegungsstellung (s4) für das Trägerelement (6) jeweils als Raststellungen ausgebildet sind, daß die beiden Raststellungen durch das Zusammenwirken einer, insbesondere in der Art eines Schaltherzens ausgestalteten Rastkurve (8, 9) mit einem in die Rastkurve (8, 9) eingreifenden, insbesondere mit einer elastischen Kraft beaufschlagten Raststift (10) festgelegt sind, und daß eine Rückstellkraft, die insbesondere mittels einer Druckfeder (19) erzeugt ist, in Richtung auf die Ausgangsstellung (s1) auf das Trägerelement (6) bei dessen Bewegung in der einen Bewegungsstellung (s2) sowie der weiteren Bewegungsstellung (s4) einwirkt.

2. Zündschloßsystem nach Anspruch 1, **dadurch gekennzeichnet, daß** die beiden Rastkurven (8,9) in Bewegungsrichtung des Trägerelements (6) hintereinander angeordnet sind.

3. Zündschloßsystem nach Anspruch 1 oder 2, **dadurch gekennzeichnet, daß** das Trägerelement (6) durch Bewegung bis in noch eine weitere Bewegungsstellung (s5), in der das Kraftfahrzeug gestartet wird, insbesondere manuell bewegbar ist, und daß vorzugsweise das Trägerelement (6) aus der noch weiteren Bewegungsstellung (s5) in die der weiteren Bewegunsstellung (s4) zugeordnete Raststellung, insbesondere nach Beendigung der manuellen Einwirkung selbsttätig, zurückgeführt wird.

4. Zündschloßsystem nach Anspruch 1, 2 oder 3, **dadurch gekennzeichnet, daß** zwischen den beiden Rastkurven (8, 9) eine Kontur (11) derart angeordnet ist, daß der Raststift (10) ausgehend von der Ausgangsstellung (s1) entlang der Kontur (11) zunächst in die der einen Bewegungsstellung (s2) entsprechende Raststellung gelenkt wird.

5. Zündschloßsystem nach einem der Ansprüche 1 bis 4, **dadurch gekennzeichnet, daß** das Zündschloß (3) ein Gehäuse (4) mit einer Öffnung (5) aufweist, daß vorzugsweise die Öffnung (5) durch das (6) in dessen Ausgangsstellung (s1) verschlossen ist, indem die beispielsweise hohlraumartige Aufnahme (7) im Trägerelement (6) mit der Öffnung (5) korrespondiert, daß weiter vorzugsweise eine vom Schlüssel (2) bewegliche Klappe (15), die insbesondere federbelastet ausgestaltet ist, die Aufnahme (7) verschließt, und daß noch weiter vorzugsweise im Gehäuse (4) eine Führung (18) für die Bewegung des Trägerelements (6) befindlich ist.

6. Zündschloßsystem nach einem der Ansprüche 1 bis 5, **dadurch gekennzeichnet, daß** am Trägerelement (6) ein, insbesondere mit einer Druckfeder (21) belasteter, verschwenkbarer Rasthebel (20) angeordnet ist, gegebenenfalls zwei Rasthebel (20) beidseitig angeordnet sind, wobei vorzugsweise der Rasthebel (20) mittels eines Nockens (22) bei in der Aufnahme (7) befindlichem Schlüssel (2) in eine Ausnehmung (23) am Schlüssel (2) eingreift, sowie insbesondere mittels einer Sperrkontur (33) im Gehäuse (4) bei nicht in der Ausgangsstellung (s1) befindlichem Trägerelement (6) in der Ausnehmung (23) in der Art einer Abzugssicherung für den Schlüssel (2) festgehalten ist, und wobei weiter vorzugsweise der Rasthebel (20) in der Ausgangsstellung (s1) des Trägerelements (6) gegen die Kraft der Druckfeder (21) in eine Unterbrechung (25) an der Sperrkontur (33) derart verschwenkbar ist, daß der Schlüssel (2) in die Aufnahme (7) einführbar sowie entnehmbar ist.

7. Zündschloßsystem nach einem der Ansprüche 1 bis 6, **dadurch gekennzeichnet, daß** das Trägerelement (6) in wenigstens einer Bewegungsstellung (s3, s5) ein elektrisches, elektronisches, optisches, sensorisches o. dgl. Schaltelement betätigt, dessen Schaltsignal insbesondere die vom Zündschloß (3) bewirkbare Funktion kennzeichnet, daß vorzugsweise das Schaltelement als Hallsensor (27) ausgebildet ist, und daß weiter vorzugsweise am Trägerelement (6) ein zum Hallsensor (27) korrespondierender Magnet (28) angeordnet ist.

8. Zündschloßsystem nach einem der Ansprüche 1 bis 7, **dadurch gekennzeichnet, daß** im Gehäuse (4) eine Leiterplatte (26) zur Aufnahme der elektrischen und/oder elektronischen Bauteile, wie des Schaltelements, des Hallsensors (27) o. dgl., insbesondere in etwa parallel zur Führung (18) für das Trägerelement (6), angeordnet ist, und daß vorzugsweise die Leiterplatte (26) im Gehäuse (4) eingelegt, eingerastet, eingeclipst o. dgl. ist.

9. Zündschloßsystem nach einem der Ansprüche 1 bis 8, **dadurch gekennzeichnet, daß** die Aufnahme (7) durch eine Blende (16) umrahmt ist, wobei insbesondere die Blende (16) auf das Gehäuse (4) aufgerastet ist.

## Claims

1. Ignition locking system, in particular in a motor vehicle, with an electronic ignition lock (3) and an electronic key (2), whereby the ignition lock (3) comprises a mount (7) for the key (2) located in a carrier element (6), whereby the carrier element (6) can be moved linearly like a slide by means of the key (2) between an initial position (s1) and movement positions (s2, s3, s4, s5), whereby in particular an electronic code can be exchanged between the key (2) and the ignition lock (3), and whereby after a positive evaluation of the code at least one function activatable by the ignition lock (3), such as switching on users in the vehicle, starting the vehicle or the like is enabled and/or triggered, **characterised in that** one movement position (s2) and a further movement position (s4) for the carrier element (6) are in the form of locking positions, **in that** the two locking positions are determined by the interaction of a locking curve (8, 9), in particular in the form of a switching heart, with a locking pin (10) engaging in the locking curve (8, 9), pressurised in particular by an elastic force, and **in that** a restoring force which is produced in particular by a compression spring (19) acts in the direction of the initial position (s1) on the carrier element (6) in its movement in the one movement position (s2) and the other movement position (s4).

2. Ignition locking system according to claim 1, **characterised in that** the two locking curves (8, 9) are arranged being one another in the direction of movement of the carrier element (6).

3. Ignition locking system according to claim 1 or 2, **characterised in that** the carrier element (6) is started by movement up to a further movement position (s5) in the vehicle, in particular is moved manually, and **in that** preferably the carrier element (6) is returned automatically from the further movement position (s5) into the locking position assigned to the other movement position (s4), in particular after completion of the manual action.

4. Ignition locking system according to claim 1, 2 or 3, **characterised in that** between the two locking curves (8, 9) a contour (11) is arranged such that the locking pin (10) is steered from the initial position (s1) around the contour (11) firstly into the locking position corresponding to movement position (s2).

5. Ignition locking system according to one of claims 1 to 4, **characterised in that** the ignition lock (3) comprises a housing (4) with an opening (5), **in that** preferably the opening (5) is locked by the carrier element (6) in its initial position (s1), whereby the e.g. hollow mount (7) in the carrier element (6) corresponds with the opening (5), **in that** also preferably a flap (15) moveable by the key (2), which flap is designed in particular to be spring-loaded, closes the mount (7), and **in that** furthermore preferably in the housing (4) there is a guide (18) for the movement of the carrier element (6).

6. Ignition locking system according to one of claims 1 to 5, **characterised in that** on the carrier element (6) a pivotable locking lever (20) is arranged that is loaded in particular by a compression spring (21), if necessary two locking levers (20) are arranged on both sides, whereby preferably the locking lever (20) engages by means of a cam (22) when the key (2) is located in the mount (7) in a recess (23) on the key (2), and is secured in particular by means of locking contour (33) in the housing (4) when the carrier element (6) in the recess (23) is not in the initial position (s1) as a form of a safety lock for the key (2), and whereby furthermore preferably the locking lever (20) in the initial position (s1) of the carrier element (6) can be pivoted against the force of the compression spring (21) into a gap (25) on the lock contour (33) so that the key can be inserted into the mount (7) and removed therefrom.

7. Ignition locking system according to one of claims 1 to 6, **characterised in that** the carrier element (6) in at least one movement position (s3, s5) activates an electrical, electronic, optical, sensory or similar switching element, the switching signal of which identifies in particular the function activatable by the ignition lock (3), **in that** preferably the switching element is in the form of a Hall sensor (27), and **in that** furthermore preferably a magnet (28) corresponding to the Hall sensor (27) is arranged on the carrier element (6).

8. Ignition locking system according to one of claims 1 to 7, **characterised in that** in the housing (4) a conductor plate (26) is arranged for mounting the electrical and/or electronic components, such as the switching element, the Hall sensor (27) or the like, in particular in parallel with the guide (18) for the carrier element (6), and **in that** preferably the conductor plate (26) is inserted, clicked or clipped etc. into the housing (4).

9. Ignition locking system according to one of claims 1 to 8, **characterised in that** the mount (7) is framed by an aperture (16) and in the particular the aperture (16) is latched onto the housing (4).

## Revendications

1. Système de serrure de démarrage, notamment d'un véhicule automobile, avec une serrure de contact (3) électronique ainsi qu'une clé (2) électronique, la serrure de contact (3) présentant un réceptacle (7) pour la clé (2) dans un élément support (6), mobile linéairement, comme un coulisseau, par l'intermédiaire de la clé (2), entre une position de départ (s1) et des positions de déplacement (s2, s3, s4, s5),
- un code électronique étant échangé notamment entre la clé (2) et la serrure de contact (3), et au moins une fonction commandée par la serrure de contact (3), telle que la mise en marche de récepteurs du véhicule, son démarrage ou fonctions similaires, étant libérés et/ou déclenchés si le code est accepté,
**caractérisé en ce qu'**
une position de déplacement (s2) et une autre position de déplacement (s4) pour l'élément support (6) sont formées comme positions d'encliquetage,
- les deux positions d'encliquetage sont déterminées par la coopération d'une courbe d'encliquetage (8, 9), réalisée notamment comme un cardioïde de commutation comprenant une tige d'encliquetage (10) s'engageant dans la courbe d'encliquetage (8, 9), contrainte notamment par une force élastique, et
- une force de rappel, générée notamment par un ressort de pression (19), agit en direction de la position de départ (s1) sur l'élément support (6) lorsqu'il se déplace dans la position de déplacement (s2) et dans l'autre position de déplacement (s4).

2. Système de serrure et de démarrage selon la revendication 1,
**caractérisé en ce que**
les deux courbes d'encliquetage (8, 9) se suivent dans le sens de déplacement de l'élément support (6).

3. Système de serrure et de démarrage selon la revendication 1 ou 2,
**caractérisé en ce que**
l'élément support (6) est mobile, notamment manuellement, vers l'avant dans une autre position de déplacement (s5) dans laquelle le véhicule est démarré, et l'élément support (6) est rappelé de préférence de la position de déplacement (s5) dans la position d'encliquetage associée à l'autre position de déplacement (s4), notamment automatiquement après la fin de l'opération manuelle.

4. Système de serrure et de démarrage selon la revendication 1, 2 ou 3,
**caractérisé en ce qu'**
un contour (11) est disposé entre les deux courbes d'encliquetage (8, 9) de sorte que la tige d'encliquetage (10) bascule à partir de la position de départ (s1) le long du contour (11) dans la position d'encliquetage correspondant à l'une des positions de déplacement (s2).

5. Système de serrure et de démarrage selon l'une des revendications 1 à 4,
**caractérisé en ce que**
la serrure de contact (3) présente un boîtier (4) avec un orifice (5), verrouillé de préférence dans sa position de départ (s1) par l'élément support (6), en mettant le réceptacle (7) par exemple en forme de chambre creuse dans l'élément support (6), en correspondance avec l'orifice (5), en outre un volet (15), de préférence contraint par ressort, déplaçable par la clé (2), ferme le réceptacle (7), et un guidage (18) pour le déplacement de l'élément support (6) se trouve de préférence dans le boîtier (4).

6. Système de serrure et de démarrage selon l'une des revendications 1 à 5,
**caractérisé en ce que**
l'élément support (6) comporte un levier d'encliquetage (20), contraint notamment par un ressort à pression (21), pivotant, ou éventuellement deux leviers d'encliquetage (20) des deux côtés, le levier d'encliquetage (20) s'engage de préférence au moyen d'une came (22) dans un réceptacle (23) sur la clé (2) lorsque la clé (2) se trouve dans le réceptacle (7), et est notamment maintenu dans le réceptacle (23) au moyen d'un contour de blocage (33) dans le boîtier (4) lorsque l'élément support (6) ne se trouve pas dans la position de départ (s1), à la manière d'un blocage d'extraction de la clé (2), et en outre un autre levier d'encliquetage (20) est pivotable de préférence dans la position de départ (s1) de l'élément support (6) contre la force du ressort à pression (21) dans une interruption (25) sur le contour de blocage (33) de sorte que la clé (2) puisse être insérée ou retirée du réceptacle (7) .

7. Système de serrure et de démarrage selon l'une des revendications 1 à 6,
**caractérisé en ce que**
l'élément support (6) active, dans au moins une position de déplacement (s3, s5) un élément de commande électrique, électronique, optique, sensoriel ou similaire, dont le signal de commande caractérise notamment la fonction pouvant être opérée par la serrure de contact (3), l'élément de commande est formé de préférence comme un capteur Hall (27), et en outre un aimant (28) correspondant au capteur Hall (27) est disposé de préférence sur l'élément support (6).

8. Système de serrure et de démarrage selon l'une des revendications 1 à 7,
**caractérisé en ce qu'**
un circuit imprimé (26) pour loger les éléments électriques et/ou électroniques, comme l'élément de commande, le capteur Hall (27) ou similaire, est disposé dans le boîtier (4), notamment pratiquement parallèlement au guidage (18) de l'élément support (6), et le circuit imprimé (26) est inséré, encliqueté, clipsé ou similaire dans le boîtier (4).

9. Système de serrure et de démarrage selon l'une des revendications 1 à 8,
**caractérisé en ce que**
le réceptacle (7) est encadré par un obturateur (16), l'obturateur (16) étant encliqueté sur le boîtier (4).
